# EUROPEAN PATENT SPECIFICATION

(11) **EP 3 442 114 B1**
(45) Date of publication and mention of the grant of the patent: **13.05.2020**
(21) Application number: 18187951.1
(22) Date of filing: 08.08.2018
(51) Int. Cl.: H02S 10/40, B65F 3/00, F24S 25/61

(54) **KIT FOR PHOTOVOLTAIC FEEDING OF A SEMI-TRAILER COMPACTOR VEHICLE AND SEMI-TRAILER COMPACTOR INCORPORATING SAID KIT**
KIT ZUR FOTOVOLTAISCHEN SPEISUNG EINES KOMPAKTORFAHRZEUGS MIT SATTELAUFLIEGER UND KOMPAKTORFAHRZEUG MIT SATTELAUFLIEGER MIT BESAGTEM KIT
KIT D'ALIMENTATION PHOTOVOLTAÏQUE DE VÉHICULE COMPACTEUR À SEMI-REMORQUE ET COMPACTEUR À SEMI-REMORQUE INCORPORANT LEDIT KIT

(30) Priority: 10.08.2017 IT 201700093096
(43) Date of publication of application: 13.02.2019
(73) Proprietor: De Bonis, Pasquale, 71013 San Giovanni Rotondo (FG) (IT); Cos.Eco. Industrie Group S.R.L., 70025 Grumo Appula (BA) (IT)
(72) Inventor: DE BONIS, Pasquale, 71013 San Giovanni Rotondo (FG) (IT); DEBERNARDIS, Giuseppe, 70025 GRUMO APPULA (BA) (IT)
(74) Representative: Robba, Pierpaolo

(56) References cited:
- EP-A2- 0 958 864
- EP-A2- 2 293 346
- DE-A1-102005 061 709
- JP-A- 2007 186 904
- US-A1- 2005 005 785
- US-A1- 2012 085 387
- US-A1- 2015 145 290

## Description

### Technical Field

The present invention relates to a kit for photovoltaic feeding of a semi-trailer compactor vehicle and to a semi-trailer compactor vehicle incorporating said kit. More precisely, the present invention relates to a kit for photovoltaic feeding of a semi-trailer compactor vehicle suitable to be employed as a waste collection point.

### Prior Art

By "waste management" it is meant the whole of the politics, procedures or methods directed to manage the whole waste process, from production to the final destination, by involving therefore the phases of collection, transport, treatment (recycling or disposal), up to the reuse of the waste materials, usually produced by human activity, in an attempt to reduce their effects on health and their impact on environment.

Referring in particular to the management of municipal solid waste, a systematic regulation concerning the management of municipal solid waste has been introduced in Italy by D.P.R. (Decree of the President of the Republic) No. 915 dated 10 November 1982, enacting three directives of the European Community concerning waste. Said management provides for the phases disclosed below. Production of solid waste is followed by a collection phase, in turn subdivided into three steps: accumulation (in plastic bags, metal containers or storage tanks), pickup and transport (of the waste as it is or by compacting it) and collection. Collection can be followed by a phase of waste processing which prepares the waste for the subsequent final destination.

Due to the constant increase in the production of municipal solid waste, the phase of transport by waste compaction is assuming an increasingly important role.

At present, said compaction phase can be performed either by using compactor containers or by using truck or semi-trailer compactors into which waste is fed.

Use of semi-trailer compactors as end-points of the phase of municipal solid waste collection and as moving means for conveying the waste to a landfill is widespread. An example of semi-trailer waste compactor is disclosed in Patent Document FR2731214.

FR2731214 discloses a semi-trailer compactor including a closed storage body for storing the collected waste, a hopper for loading the waste, a chamber equipped with an actuating cylinder for compacting the stored waste, and a hydraulic ejector for emptying the storage body.

In order to actuate the members of the compacting system (such as for instance actuating cylinder or shovels) the semi-trailers must either be connected to a tractor or be equipped with autonomous engines, independent of a tractor, such as for instance mainly internal combustion engines.

Yet, such kinds of semi-trailers have several disadvantages. First, semi-trailers requiring connection to a tractor in order to ensure that the compacting system can operate have the disadvantage that the tractor is bound to the semi-trailer for the whole of the operating time of the compacting system (both during the phase of waste compaction and during the phase of emptying of the storage body), thereby preventing the tractor from being utilisable for other purposes, such as for instance hauling another vehicle.

Instead, in case the semi-trailer is equipped with a dedicated combustion engine, it has the disadvantage that it is not wholly autonomous, since the possibility of operating depends on the presence of fuel. This aspect moreover makes use of the semi-trailer economically expensive. Moreover, as known to the skilled in the art, combustion engines are noisy, and this entails limitations in their use in places and hours where peace would be disturbed. A further disadvantage of combustion engines is the high environmental impact because of polluting emissions.

A possible solution to these problems has been proposed in CN204056908 and CN204549105. Such documents actually disclose a vehicle for waste transport and collection, by compacting it, and a waste compacting container, both the vehicle and the container being equipped with solar panels connected to batteries for collecting the produced power and to compacting systems.

The prior art solutions have however the drawback that they are subject to breakages caused by vibrations generated during vehicle travel and during operation of the members intended for compacting and loading and unloading waste. Actually, it is known that vehicles of this kind travel on roads that often have ruined surfaces or are not paved, for instance during conveyance to a landfill, and are subject to vibrations and stresses which can even be violent. Moreover, the members intended for compacting and loading and unloading waste, which typically are hydraulically operated, are sources of violent stresses, which are transmitted to the vehicle structure and from the latter to the solar panels associated with the vehicle.

Solar panels, due to their construction and to the materials employed, at least in part glass in some kinds of panels, are particularly fragile and thus they are not suitable to be moved or submitted to shocks and vibrations.

JP 2007 186904 discloses a system for installing solar panels on the covering of a building. The system disclosed in JP 2007 186904 includes a set of brackets for attaching the solar panels to the covering and an elastomeric material between the brackets and the panels.

Vibration and shakes which are transmitted to the solar panels during travel can damage the fragile glazed surfaces of the panels, thereby making their substitution necessary with a consequent economic damage, considerable maintenance work and stop of the vehicle, the inactivity of which causes an economic loss.

The prior art solutions described above are mainly suitable to the construction of stationary systems, i.e. systems that do not undergo significant vibrations or shakes.

The prior art solutions applied to compactor vehicles have moreover the drawback that they are based upon the simple addition of standard, commercially available solar panels, to standard compactor vehicles, without providing for an efficient logic of management of the power produced and consumed.

It is a main object of the invention to provide a kit for the photovoltaic feeding of a semi-trailer compactor vehicle, which does not have the drawbacks of the prior art and which enables making semi-trailer compactors equipped with robust and reliable solar panels.

It is another object of the invention to provide a kit for photovoltaic feeding, which can be easily installed on the roof of a compactor vehicle, without important modifications of the vehicle.

It is yet another object of the invention to control and manage the power produced by the kit in order to optimise exploitation thereof, by reducing consumption and making therefore the kit advantageously applicable to a multiplicity of practical uses in the field of waste collection.

It is a further, but not the last object of the invention to provide a kit of the kind mentioned above, which can be industrially produced at limited costs.

The above and other objects are achieved with the kit for photovoltaic feeding of a semi-trailer compactor vehicle and with the semi-trailer compactor vehicle incorporating said kit, as claimed in the appended claims.

### Description of the invention

The kit for photovoltaic feeding of a semi-trailer compactor vehicle according to the present invention mainly includes at least one solar panel, a supporting frame for the at least one solar panel and a bracketing system for attaching the supporting frame to the roof of the compactor container of the semi-trailer compactor vehicle. Preferably, said at least one solar panel is a photovoltaic solar panel of a kind known to the technician skilled in the art, and for this reason it will be not described further. According to a preferred embodiment of the present invention, at least one of the outer layers of the panel can be made of glass.

Preferably, the solar panels will consist of high-efficiency modules of crystalline silicon, capable of delivering a maximum theoretical power preferably of at least about 4.32 kWp, with an average daily production of at least about 25 kWh.

The bracketing system of the present invention mainly includes, with respect to the longitudinal centre line of the semi-trailer compactor vehicle, at least one proximal vibration-damping bracket and at least one distal vibration-damping bracket. The provision of the bracketing system provided with vibration-damping brackets is advantageous in that damping of the vibrations prevents breakage of the glazed surfaces of the solar panel.

According to an embodiment of the present invention, the proximal vibration-damping bracket is C-shaped and is attached to the roof of the container of the semi-trailer compactor vehicle by known means, such as screws or bolts or rivets. In the alternative, said bracket can be attached by means of an adhesive applied between the proximal vibration-damping bracket and the surface of the roof of the vehicle, or the proximal vibration-damping bracket can be welded to the roof of the container of the compactor vehicle.

According to another embodiment of the present invention, the proximal vibration-damping bracket is attached by known means to a box-like element attached to the roof of the vehicle, in proximity of the longitudinal centre line. Such an embodiment advantageously allows obtaining a reliable and robust attachment and ensuring the desired inclination for the corresponding slope of solar panels arranged along the roof of the vehicle, parallel to the longitudinal centre line.

The bracketing system of the present invention is further provided with at least one vibration-damping system comprising a nut-bolt-washer arrangement associated, preferably with a certain clearance, with the at least one proximal vibration-damping bracket and with the frame of the at least one solar panel for connecting said frame to the roof of the semi-trailer compactor vehicle. Advantageously, in order to promote the damping function of the bracketing system, the washer of the nut-bolt-washer arrangement allows an oscillatory movement of the longitudinal axis of the nut-bolt-washer arrangement by an angle preferably of about 10°-12°. For instance, the washer of the arrangement can be made of rubber or another material having elastic damping properties.

The bracketing system according to the present invention further includes at least one L-shaped counter-bracket and at least one flexible vertical spacer for connecting the frame to the roof of the semi-trailer vehicle. According to the invention, said flexible vertical spacer has a first end fixedly attached to the counter-bracket and to the frame of the solar panel and a second end fixedly attached to the distal vibration-damping bracket. The counter-bracket and the first end of the flexible vertical spacer are attached to the supporting frame of the solar panel by known means, such as for instance a bolt and a nut. Preferably, the second end of the flexible vertical spacer and the distal vibration-damping bracket are fixedly attached to a second vertical counter-bracket by known means, such as for instance a bolt and a nut. According to an embodiment of the present invention, said second vertical counter-bracket is preferably fixedly attached to and made irremovable from the roof of the vehicle by known means, e.g. by gluing or welding or screwing or riveting.

Preferably, the flexible vertical spacer is a spacer made of ethyl-propylene rubber (EPR) allowing a certain vertical displacement, preferably in the range of about 3 to 15 cm, of the solar panel.

The provision of the flexible vertical spacer further assists the damping function of the bracketing system.

According to the invention, the vibration-damping properties of the proximal and distal brackets are given by said washer and by the flexible spacer, respectively.

The at least two vibration-damping brackets and the at least one L-shaped counter-bracket of the kit of the present invention are preferably made of a material resisting to the continuous mechanical stresses to which the brackets and the counter-bracket are submitted, e.g. stainless steel or other metallic or polymeric alloys.

Advantageously, according to the invention, the bracketing system prevents the solar panels from coming into contact with the vehicle structure, in particular with the roof or the side with which they are associated and which surround the container of the compactor, even when the panels are submitted to vibrations due to the travel of the vehicle on the road.

The solar panels, when they are installed on the roof of the vehicle, are advantageously arranged in pairs and are oriented according to inclined planes sloping from the longitudinal centre line towards the outside of the vehicle. Such an arrangement allows optimising the exploitation of the available surface. In a standard semi-trailer vehicle, having a length of up to 11 - 12 m and a width of about 3 m, the surface available for the solar panels is about 20 - 30 m².

According to a preferred embodiment of the kit according to the present invention, the frame includes a rim made of profiled aluminium and surrounding the solar panel.

According to a preferred embodiment of the present invention, the kit is advantageously attached on the roof of a semi-trailer compactor vehicle. More particularly, two kits arranged in a mirror-like way relative to the longitudinal centre line of the vehicle are preferably attached on the roof of the vehicle, thereby forming a kit pair. Even more preferably, six pairs of kits are attached on the roof of the vehicle.

The present invention further relates to a semi-trailer compactor including at least one kit for photovoltaic feeding of a semi-trailer compactor vehicle according to the present invention.

The semi-trailer compactor according to the present invention mainly includes: a container for the storage of material to be compacted, such as for instance municipal solid waste; a compacting shovel and piston for waste compaction; a mouth for loading/unloading the material to be compacted; a partition wall; an electro-hydraulic actuating system actuating and controlling the movements of all movable parts of the semi-trailer (shovel, piston, partition wall, loading/unloading mouth); an energy accumulating system, connected to the electro-hydraulic actuating system and provided with solid-state accumulators (e.g. Li-on, AGM, Gel-Pb, NMH) having a system for managing the charge necessary for moving the movable components of the semi-trailer. The semi-trailer further includes at least one kit for photovoltaic feeding made in accordance with the present invention and including at least one solar panel connected to the accumulators in order to distribute the power produced and to provide therefore the semi-trailer compactor with energy autonomy, and a bracketing system provided with vibration-damping brackets, which allow damping of vibrations and preventing breakage of the glazed surfaces of the solar panel.

The connection of the at least one solar panel to the energy accumulating system, in turn connected to the electro-hydraulic actuating system, has the advantage of supplying the semi-trailer compactor with power while ensuring autonomy, utilisation economy and environmental sustainability.

According to an alternative embodiment of the present invention, said energy accumulating system can moreover be connected to a power mains by means of a battery charger. According to this embodiment of the invention, when the energy accumulating system is connected to the battery charger, the connection to the at least one solar panel is cut off. Connection of the accumulating system to the battery charger excludes therefore the connection of the accumulating system to the at least one solar panel.

The provision of the bracketing system equipped with vibration-damping brackets has the advantage of preventing that, during travel and generally during operation of the semi-trailer, vibrations and shakes are transmitted to the solar panel, and especially to the fragile glazed surfaces, causing their breakage with consequent important economic damages.

Advantageously, thanks to the kit according to the present invention, a semi-trailer waste-compactor vehicle can be made to operate during the whole day, with a low noise level, and thus it is suitable to be installed in public areas, without thereby causing acoustic disturbance.

A further advantage of the invention results from the provision of a control algorithm for the electronic control unit managing the hydro-pneumatic actuators of the compactor, which algorithm is capable of avoiding current absorption surges that, if frequently occurring and/or lasting for a long time, could jeopardise the operating life of the accumulators.

In accordance with a particular embodiment of the invention, the kit incorporates an assembly for recovering electric energy during braking, based on the KERS (Kinetic Energy Recovery System) technology, which assembly is suitable to feed and recharge the accumulators.

### Brief Description of the Figures

Some preferred embodiments of the invention will be given by way of non-limiting example with reference to the accompanying Figures, in which:
- Fig. 1A is a rear view of a detail of the kit for photovoltaic feeding according to the present invention associated with the roof of a semi-trailer compactor vehicle;
- Fig. 1B shows a first detail of Fig. 1A;
- Fig. 1C shows a second detail of Fig. 1A;
- Fig. 2A is a rear view of the kit shown in Fig. 1A;
- Fig. 2B is a rear view of the roof of a semi-trailer compactor vehicle equipped with the kit shown in Fig. 1A;
- Fig. 3 is a side view of a semi-trailer compactor incorporating a plurality of kits according to the invention;
- Fig. 4 is a top view of the semi-trailer shown in Fig. 3.

In all Figures, the same reference numerals have been used to denote equal or functionally equivalent components.

### Description of some preferred embodiments

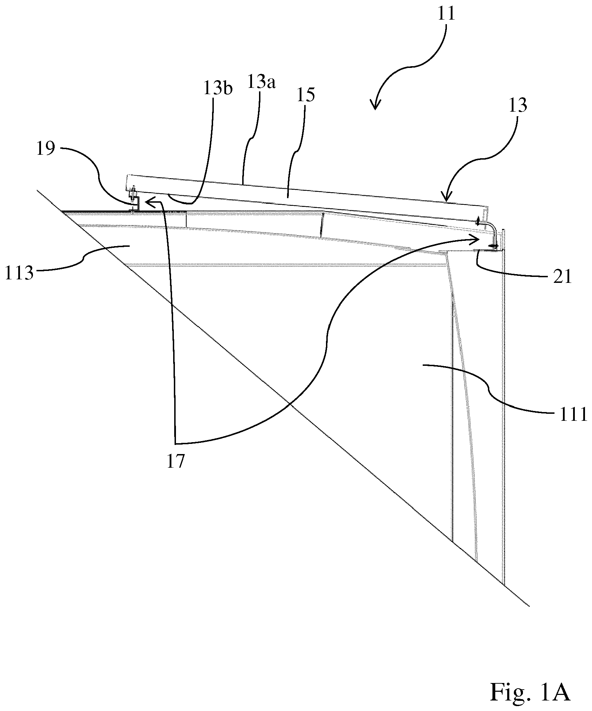

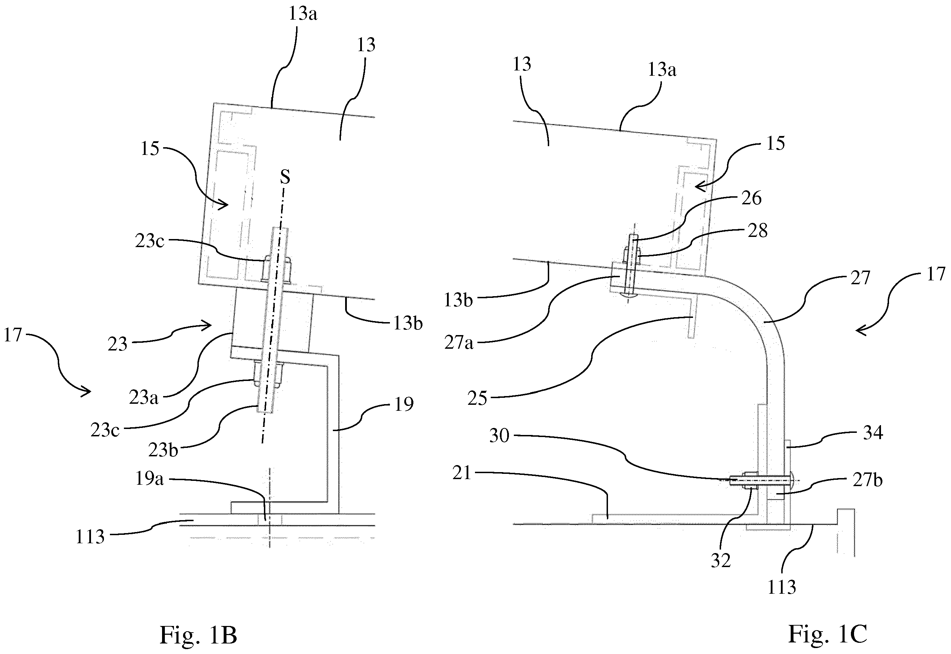

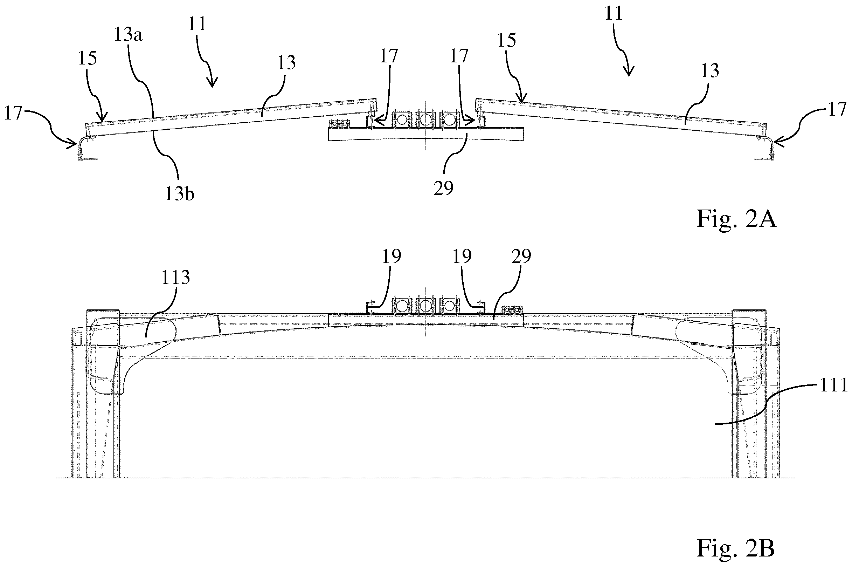

With reference to Figs. 1 and 2, there is shown a preferred embodiment of the kit according to the invention for photovoltaic feeding of a semi-trailer compactor vehicle. In the Figures, the kit has been generally denoted 11 and the semi-trailer has been generally denoted 111.

More particularly, Fig. 1A shows a preferred embodiment of kit 11 for photovoltaic feeding of a semi-trailer compactor vehicle 111, according to the present invention, wherein said kit 11 mainly includes a photovoltaic solar panel 13, a supporting frame 15 for solar panel 13 and, advantageously, a bracketing system 17 for attaching frame 15 to roof 113 of semi-trailer compactor vehicle 111. Said solar panel 13 is a photovoltaic solar panel of a kind known to the technician skilled in the art, and for this reason it will be not described further. Externally, solar panel 13 has a front surface 13a made of glass directed towards the outside, i.e. upwards in the Figures, and a rear surface 13b.

Advantageously, bracketing system 17 mainly includes, with respect to the longitudinal centre line of semi-trailer compactor vehicle 111, a proximal vibration-damping bracket 19 and a distal vibration-damping bracket 21. As it will become more apparent from the description below, the provision of bracketing system 17 is advantageous thanks to the vibration damping, preventing breakage of glazed surfaces 13a and of the other components of solar panel 13 during travel of vehicle 111 and during operation of the compacting, loading and unloading members vehicle 111 is equipped with.

As it can be better seen in Figs. 1B and 1C, proximal bracket 19 is C-shaped and is secured to roof 113 of vehicle 111. Preferably, in order to better accomplish the vibration-damping function, C-shaped bracket 19 has its concave side turned towards the centre line of the vehicle. Securing of bracket 19 to roof 113 can take place by known means, such as for instance screws or rivets, passing through bores 19a.

Advantageously, bracketing system 17 further includes a nut-bolt-washer arrangement 23 associated with proximal vibration-damping bracket 19 and with frame 15 of solar panel 13 for connecting said frame 15 to roof 113 of vehicle 111. In order to promote the damping function of bracketing system 17, washer 23a of nut-bolt-washer arrangement 23 allows an oscillatory movement of longitudinal axis "S" of nut-bolt-washer arrangement 23 by an angle of about 10°-12°. Washer 23a can be made of rubber or another material having elastic vibration-damping properties. Moreover, in arrangement 23, washer 23a is passed through by threaded pin 23b of arrangement 23 and is locked between frame 15 and bracket 19 by means of a pair of bolts 23c located at opposite ends of threaded pin 23b.

Bracketing system 17 according to the present invention further includes a flexible vertical spacer 27 for connecting said frame 15 to roof 113 of vehicle 111. Flexible vertical spacer 27 has a first end 27a fixedly attached to an L-shaped counter-bracket 25 and to frame 15 of solar panel 13, and a second end 27b fixedly attached to distal bracket 21.

Preferably, according to the invention, the vibration-damping properties of brackets 19 and 21 are given by washer 23a and spacer 27, respectively.

Counter-bracket 25 and the first end 27a of the flexible vertical spacer 27 are secured to supporting frame 15 of solar panel 13 by known means, a screw 26 and a nut 28 in the example illustrated. Said first end 27a is therefore locked between frame 15 and counter-bracket 25 and is passed through by screw 26 which also passes through counter-bracket 25 and frame 15.

The second end 27b of flexible vertical spacer 27 is locked between L-shaped distal bracket 21 and a second vertical counter-bracket 34, which are both secured to roof 113 of vehicle 111. The second end 27b can be fastened to bracket 21 and counter-bracket 34 by known means, a screw 30 and a nut 32 in the example illustrated.

Flexible vertical spacer 27 is a spacer made of EPR rubber allowing a displacement of solar panel 13 in vertical direction, i.e. in a direction substantially parallel to axis S of nut-bolt-washer arrangement 23, of about 5 cm, thereby further promoting the vibration-damping function of bracketing system 17.

According to this preferred embodiment of kit 11 according to the present invention, said frame 15 includes a rim made of profiled aluminium, surrounding solar panel 13.

As it can be better appreciated from Figs. 2, 3 and 4, kit 11 according to the present invention is advantageously secured on roof 113 of a semi-trailer compactor 111.

In semi-trailer compactor vehicle 111 illustrated, a pair of kits 11, symmetrically arranged relative to the central line of vehicle 111, is secured on roof 113.

According to this embodiment, proximal bracket 19 is attached to a box-like element 29 centrally fastened to roof 113 of vehicle 111 by known fastening means, such as screws and bolts, or by welding. Box-like element 29 is located near the longitudinal centre line of vehicle 111 and serves as a supporting base for a pair of kits 11 arranged in a mirror-like way relative to the centre line. Element 29 allows a rapid fastening of frame 115 to roof 113, and moreover allows giving the desired inclination to frame 15 and photovoltaic panels 13 associated therewith.

The present invention also relates to a semi-trailer compactor 111 including at least one of said kits 11 for photovoltaic feeding.

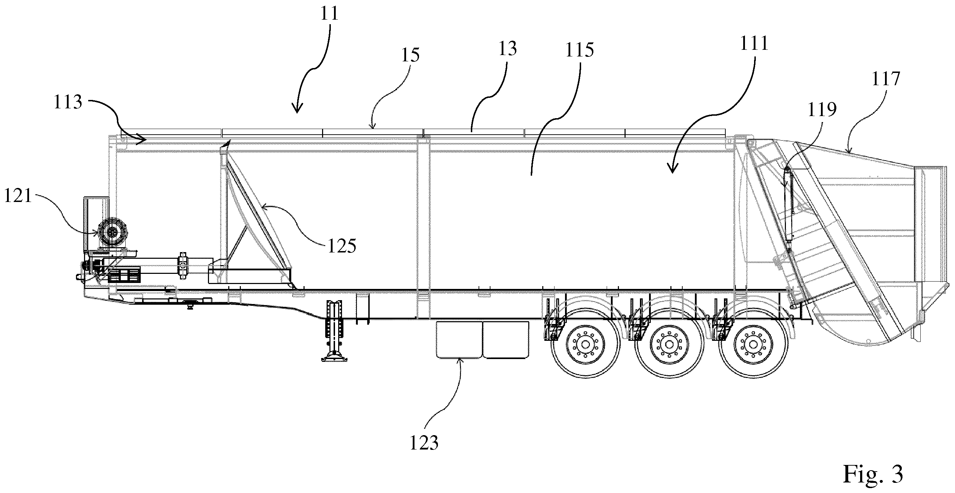

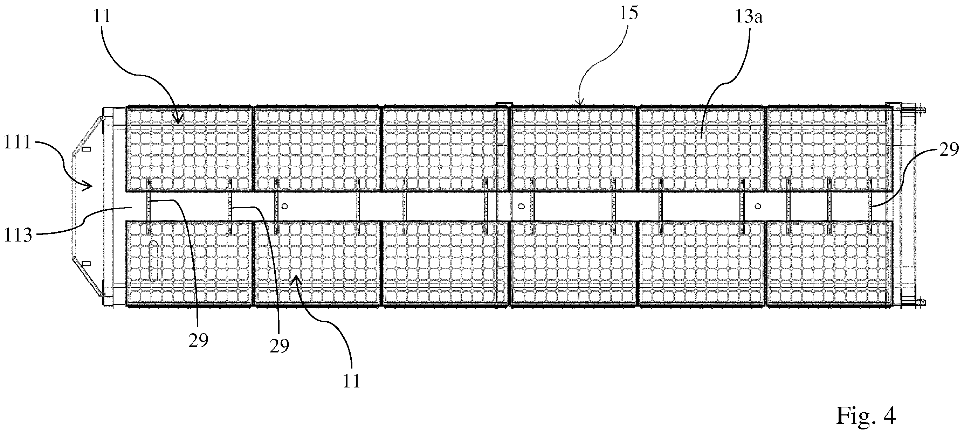

Figs. 3 and 4 show an embodiment in which six pairs of kits 11 are fastened on roof 113 of a semi-trailer compactor 111, which will be equipped in the whole with twelve kits 11.

Said semi-trailer 111 mainly includes: a container 115, having a roof 113, for the storage of material to be compacted; a compacting shovel and piston 119; a mouth 117 for loading/unloading the material; a movable partition wall 125; an electro-hydraulic actuating system 121; an energy accumulating system, connected to the electro-hydraulic actuating system and provided with solid-state accumulators 123 (e.g. Li-on, AGM, Gel-Pb, NMH) having a charge management system. Advantageously, each of the twelve kits 11 for photovoltaic feeding includes a solar panel 13 connected to accumulators 123 in order to distribute the power produced and to provide therefore semi-trailer compactor 111 with energy autonomy, and a bracketing system 17 provided with vibration-damping brackets 19, 21 allowing damping vibrations and preventing breakage of the glazed surfaces of solar panel 13.

In the embodiment illustrated, using solar panels consisting of high-efficiency modules of crystalline silicon, it is possible to deliver a maximum theoretical power of about 4.32 kWp, with an average daily production of about 25 kWh. General voltage T_{gen} of the system can be for instance 96 V dc. Moreover, the solar panels are managed so as to equitably deliver the power produced on both sides by using T_{gen}/2 solar battery chargers, one on each side, thereby preventing the different orientation of the panels form jeopardising the recharge of one side to the expenses of the other side. Charge regulators, two in the embodiment described, ensure optimisation of the operation of the photovoltaic system during recharging, by tracking the point of maximum power for each module. Other nominal operating voltages, e.g. 48 V or 120 V, will be possible for the system.

Hereinafter, the table with the detail of the energy absorption for each of the working step included in a typical operating cycle of the compactor is reported.

| | **EXECUTION TIME (sec)** | **POWER (KW)** | **RPM MOT.** | **A/h CONSUMED** |
|---|---|---|---|---|
| OPERATING STEP | 5 | 7,14 | 2450 | 0,132 |
| | 7 | 2,18 | 1345 | 0,055 |
| | 2 | 0,96 | 2450 | 0,008 |
| | 15 | 11,19 | 896 | 0,586 |
| | 2 | 0,96 | 2450 | 0,008 |
| | 25 | 14,31 | 1000 | 1,244 |
| IN EXCHANGE STEP | 3 | 16 | 1412 | 0,165 |
| | 3 | 15 | 1900 | 0,157 |
| | 3 | 16 | 1412 | 0,165 |
| | 3 | 4 | 2450 | 0,046 |
| | 3 | 16 | 1412 | 0,165 |

As it can be appreciated from the table, each cycle absorbs about 2.7 A/h in the average. In the embodiment described, the kit has been capable of ensuring more than one hundred operating cycles, starting from a 100% charge condition.

## Claims

1. Kit (11) for photovoltaic feeding of a semi-trailer compactor vehicle (111), wherein said kit (11) includes at least one photovoltaic solar panel (13) and a supporting frame (15) for said at least one photovoltaic panel (13), **characterised in that** the kit includes a vibration-damping bracketing system (17) for attaching the frame (15) to the roof (113) of the vehicle (111), comprising:
- at least one proximal bracket (19) and at least one distal bracket (21) with respect to the longitudinal centre line of the vehicle (111);
- at least one nut-bolt-washer arrangement (23) associated with the proximal bracket (19) and with the frame (15) of the solar panel (13) for connecting said frame (15) to the roof (113) of the vehicle (111), said nut-bolt-washer arrangement (23) comprising a washer (23a) made of an elastic material, which is capable of absorbing vibrations and imparts vibration-damping properties to the proximal bracket (19);
- at least one L-shaped counter-bracket (25) and at least one flexible vertical spacer (27) for connecting said frame (15) to the roof (113) of the vehicle (111), wherein said flexible vertical spacer (27) has a first end (27a) and a second end (27b), wherein the first end (27a) is fixedly attached to the counter-bracket (25) and to the frame (15) of the solar panel (13), and the second end (27b) is fixedly attached to the distal vibration-damping bracket (21), said vertical spacer (27) imparting vibration-damping properties to the distal bracket (21).

2. Kit according to claim 1, wherein the washer (23a) allows an oscillatory movement of the longitudinal axis (S) of the nut-bolt-washer arrangement (23) by an angle of about 10°-12°.

3. Kit according to any of the preceding claims, wherein said flexible vertical spacer (27) is a spacer made of EPR rubber allowing a vertical travel of about 5 cm for the solar panel (13).

4. Kit according to any of the preceding claims, wherein said frame (15) comprises a box-like frame surrounding the solar panel (13).

5. Kit according to claim 4, wherein said frame (15) comprises a rim made of profiled aluminium.

6. Kit according to any of the preceding claims, wherein the proximal bracket (19) is attached to a box-like element (29) which is adapted to be centrally fastened to the roof (113) of the vehicle (111) near the longitudinal centre line and serves as a supporting base for a pair of kits (11) arranged in a mirror-like way relative to said centre line.

7. Semi-trailer compactor (111) comprising at least one kit (11) for photovoltaic feeding as claimed in claims 1 to 6.

8. Semi-trailer compactor (111) according to claim 7, wherein said kits (11) are arranged in pairs oriented according to inclined planes sloping from the longitudinal line towards the outside of the vehicle.

9. Semi-trailer compactor (111) according to claim 8, comprising six pairs of said kit (11).

10. Semi-trailer compactor (111) according to any of claims 7, 8 or 9, wherein the length of said semi-trailer (111) is between 11-12 m and the width o said semi-trailer is about 3 m, resulting an area for said photovoltaic panels (13) between 20-30 m².

## Patentansprüche

1. Kit (11) zur fotovoltaischen Speisung eines Kompaktorfahrzeugs (111) mit Sattelauflieger, wobei das Kit (11) wenigstens ein fotovoltaisches Solarpanel (13) und einen tragenden Rahmen (15) für das wenigstens eine fotovoltaische Panel (13) aufweist, **dadurch gekennzeichnet, dass** das Kit ein schwingungsdämpfendes Klammersystem (17) zum Befestigen des Rahmens (15) an dem Dach (113) des Fahrzeugs (111) enthält, mit:
- wenigstens einer in Bezug auf die mittlere Längslinie des Fahrzeugs (111) proximalen Klammer (19) und wenigstens einer distalen Klammer (21),
- wenigstens einer Mutter-Schraube-Unterlegscheibe-Baugruppe (23), die der proximalen Klammer (19) und dem Rahmen (15) des Solarpanels (13) zum Befestigen des Rahmens (15) an dem Dach (113) des Fahrzeugs (111) zugeordnet ist, wobei die Mutter-Schraube-Unterlegscheibe-Baugruppe (23) eine Unterlegscheibe (23a) aus einem elastischen Material enthält, das dazu in der Lage ist, Schwingungen aufzunehmen und der proximalen Klammer (19) schwingungsdämpfende Eigenschaften verleiht,
- wenigstens einer L-förmige Gegenklammer (25) und wenigstens einem flexiblen vertikaler Abstandshalter (27) zum Befestigen des Rahmens (15) an dem Dach (113) des Fahrzeugs (111), wobei der flexible vertikale Abstandhalter (27) ein erstes Ende (27a) und ein zweites Ende (27b) hat, wobei das erste Ende (27a) fest an der Gegenklammer (25) und an dem Rahmen (15) des Solarpanels (13) angebracht ist und das zweite Ende (27b) fest an der distalen schwingungsdämpfenden Klammer (21) angebracht ist, wobei der vertikale Abstandhalter (27) der distalen Klammer (21) schwingungsdämpfende Eigenschaften verleiht.

2. Kit nach Anspruch 1, wobei die Unterlegscheibe (23a) eine oszillierende Bewegung der Längsachse (S) der Mutter-Schrauben-Unterlegscheibe-Baugruppe (23) um einen Winkel von etwa 10°-12° erlaubt.

3. Kit nach einem der vorstehenden Ansprüche, wobei der flexible vertikale Abstandhalter (27) ein Abstandhalter aus EPR Gummi ist, der eine vertikale Bewegung des Solarpanels (13) um etwa 5 cm erlaubt.

4. Kit nach einem der vorstehenden Ansprüche, wobei der Rahmen (15) ein kastenartiger Rahmen ist, der das Solarpanel (13) umgibt.

5. Kit nach Anspruch 4, wobei der Rahmen (15) einen Rand aus profiliertem Aluminium aufweist.

6. Kit nach einem der vorstehenden Ansprüche, wobei die proximale Klammer (19) an einem kastenartigen Element (29) angebracht ist, das dafür ausgelegt ist, zentral an dem Dach (113) des Fahrzeugs (111) in der Nähe der mittleren Längslinie befestigt zu werden, und als tragende Basis für ein Paar von Kits (111) dient, die spiegelartig relativ zu der Mittellinie angeordnet sind.

7. Kompaktorfahrzeug mit Sattelauflieger (111) mit wenigstens einem Kit (11) zur fotovoltaischen Speisung nach einem der Ansprüche 1 bis 6.

8. Kompaktorfahrzeug mit Sattelauflieger (111) nach Anspruch 7, wobei die Kits (11) in Paaren angeordnet sind, die gemäß geneigten Ebenen orientiert sind, die von einer Längslinie des Fahrzeugs aus nach außen abfallen.

9. Kompaktorfahrzeug mit Sattelauflieger (111) nach Anspruch 8, mit sechs Paaren des Kits (11).

10. Kompaktorfahrzeug mit Sattelauflieger (111) nach einem der Ansprüche 7, 8 oder 9, wobei die Länge des Sattelaufliegers (111) zwischen 11-12 m bterägt und die Breite des Sattelaufliegers etwa 3 m beträgt, woraus eine Fläche für die fotovoltaischen Panele (13) zwischen 20-30 m² resultiert.

## Revendications

1. Kit (11) d'alimentation photovoltaïque d'un véhicule compacteur à semi-remorque (111), ledit kit (11) comprenant au moins un panneau solaire photovoltaïque (13) et un cadre de support (15) destiné audit au moins un panneau photovoltaïque (13), **caractérisé en ce que** le kit comprend un système de fixation amortisseur de vibrations (17) destiné à fixer le cadre (15) au toit (113) du véhicule (111), ledit kit comprenant :
- au moins une fixation proximale (19) et au moins une fixation distale (21) par rapport à la ligne médiane longitudinale du véhicule (111) ;
- au moins un agencement écrou-boulon-rondelle (23) associé à la fixation proximale (19) et au cadre (15) du panneau solaire (13) et destiné à relier ledit cadre (15) au toit (113) du véhicule (111), ledit agencement écrou-boulon-rondelle (23) comprenant une rondelle (23a) en matériau élastique qui est capable d'absorber les vibrations et qui confère des propriétés d'amortissement de vibrations à la fixation proximale (19) ;
- au moins une contre-fixation (25) en forme de L et au moins une entretoise verticale flexible (27) destinées à relier ledit cadre (15) au toit (113) du véhicule (111), ladite entretoise verticale flexible (27) comportant une première extrémité (27a) et une deuxième extrémité (27b), la première extrémité (27a) étant attachée de manière fixe à la contre-fixation (25) et au cadre (15) du panneau solaire (13), et la deuxième extrémité (27b) étant attachée de manière fixe à la fixation distale amortisseur de vibrations (21), ladite entretoise verticale (27) conférant des propriétés d'amortissement de vibrations à la fixation distale (21).

2. Kit selon la revendication 1, la rondelle (23a) permettant un mouvement oscillatoire de l'axe longitudinal (S) de l'agencement écrou-boulon-rondelle (23) d'un angle d'environ 10° à 12°.

3. Kit selon l'une quelconque des revendications précédentes, ladite entretoise verticale flexible (27) étant une entretoise en caoutchouc EPR permettant au panneau solaire (13) d'effectuer une course verticale d'environ 5 cm.

4. Kit selon l'une quelconque des revendications précédentes, ledit cadre (15) comprenant un cadre en forme de boîte qui entoure le panneau solaire (13).

5. Kit selon la revendication 4, ledit cadre (15) comprenant un rebord en aluminium profilé.

6. Kit selon l'une quelconque des revendications précédentes, la fixation proximale (19) étant attachée à un élément (29) en forme de boîte qui est adapté pour être fixé centralement au toit (113) du véhicule (111) près de la ligne médiane longitudinale et qui sert de base de support à une paire de kits (11) disposés en miroir par rapport à ladite ligne médiane.

7. Compacteur à semi-remorque (111) comprenant au moins un kit (11) d'alimentation photovoltaïque selon les revendications 1 à 6.

8. Compacteur à semi-remorque (111) selon la revendication 7, lesdits kits (11) étant disposés en étant orientés par paires selon des plans inclinés s'étendant en pente depuis la ligne longitudinale vers l'extérieur du véhicule.

9. Compacteur à semi-remorque (111) selon la revendication 8, comprenant six paires dudit kit (11).

10. Compacteur à semi-remorque (111) selon l'une quelconque des revendications 7, 8 ou 9, la longueur de ladite semi-remorque (111) étant comprise entre 11 et 12 m et la largeur de ladite semi-remorque étant d'environ 3 m, de sorte que la surface destinée auxdits panneaux photovoltaïques (13) est comprise entre 20 et 30 m².
